# EUROPEAN PATENT APPLICATION

(11) **EP 4 353 478 A1**
(43) Date of publication of application: **17.04.2024**
(21) Application number: 22819981.6
(22) Date of filing: 09.05.2022
(51) Int. Cl.: B33Y 10/00, B33Y 30/00, B23K 9/032, B23K 9/04, B23K 9/29

(54) **SUCTION APPARATUS, SUCTION METHOD, WELDING SYSTEM, WELDING METHOD, AND ADDITIVE MANUFACTURING METHOD**

(30) Priority: 09.06.2021 JP 2021096813
(71) Applicant: KABUSHIKI KAISHA KOBE SEIKO SHO (KOBE STEEL, LTD.), Hyogo 651-8585 (JP)
(72) Inventor: MUKAI, Naoki, Fujisawa-shi, Kanagawa 251-8551 (JP)
(74) Representative: Müller-Boré & Partner Patentanwälte PartG mbB
(86) International application number: PCT/JP2022/019738
(87) International publication number: WO 2022/259796

(57) **Abstract**

A suction apparatus (1) is provided with: a first path connecting an inlet (3) and a drive opening (11) of an ejector (10); a second path connecting a suction/ejection opening (5) and an intake opening (13) of the ejector (10); and a third path connecting the inlet (3) and the suction/ejection opening (5). When the second path is connected by a path switching unit (7), a gas or an aerosol is suctioned via the suction/ejection opening (5) by means of the first path and the second path. When the third path is connected by the path switching unit (7), a compressed gas is ejected via the suction/ejection opening (5) by means of the third path.

## Description

### Technical Field

The present invention relates to a suction apparatus, a suction method, a welding system, a welding method, and an additive manufacturing method.

### Background Art

In some cases, a suction mechanism aimed at removal of dust, a hydrogen source, fumes, and the like is provided in various types of machines such as a processing machine, a welding apparatus, and an additive manufacturing apparatus.

For example, PTL 1 discloses a welding apparatus that suctions a hydrogen source generated by welding. More specifically, the welding apparatus of PTL 1 includes a contact tip that guides a welding wire and supplies a welding current to the welding wire and a suction unit that surrounds the periphery of the welding wire projecting from the contact tip and that is open toward a tip end portion of the welding wire so as to suction gas. The suction unit suctions the hydrogen source released from the welding wire from the periphery and the vicinity of the tip end portion of the welding wire projecting from the contact tip, thereby reducing the diffusible hydrogen content in a weld metal.

Furthermore, PTL 2 discloses a laser welding apparatus that includes a mechanism to suction fumes generated by welding. More specifically, the welding apparatus of PTL 2 includes a processing head that condenses laser light and radiates the laser light to a weld target material, means for feeding that feeds a welding wire to a portion to which the laser light is radiated, means for supplying a shield gas that protects a molten pool formed by the radiation of the laser light and the vicinity of the molten pool, means for moving a processing head or the weld target material, means for suctioning that suctions weld products such as fumes or spatters generated from a molten portion, means for protecting that protects the processing head from laser reflected light or heat of radiation of the molten portion, and means for cleaning that removes the weld products deposited on a surface of a weld metal.

### Citation List

### Patent Literature

PTL 1: Japanese Unexamined Patent Application Publication No. 2016-137518
PTL 2: Japanese Unexamined Patent Application Publication No. 2012-000630
PTL 3: Japanese Unexamined Patent Application Publication No. 2017-087203

### Summary of Invention

### Technical Problem

Since dust, a hydrogen source, fumes, and the like generated by operations of various types of machines such as the processing machine, the welding apparatus, and the additive manufacturing apparatus move into the apparatus including the suction mechanism (referred to as a suction apparatus hereinafter), maintenance such as cleaning of the inside of the suction apparatus, inspection of instruments, replacement of filters is required. In particular, arc welding, wire and arc additive manufacturing (WAAM) that uses the arc welding included in an additive manufacturing technique, and the like generate a large volume of fumes. Thus, it is required that the above-described maintenance be frequently performed. However, maintenance of the suction apparatus is not described in PTL 1 or PTL 2.

Regarding the maintenance of the suction apparatus, for example, PTL 3 discloses a dust collection apparatus for a processing machine. The dust collection apparatus of PTL 3 is a dust collection apparatus for a processing machine and provided partway along a duct through which a smoke and dust generated from an object to be processed are suctioned and drawn. The dust collection apparatus includes a main body that has a tubular shape and that generates a rotation air flow therein by using suctioned air, a first collection unit that is provided along an inner wall surface of the main body and that collects the smoke and the dust separated from air by the rotation air flow, and an exhaust pipe that extends from a middle of the inside of the main body through one end of the main body to the outside. However, according to PTL 3, it has a large size for a suction apparatus and is not easily carried. For example, it is not suited to welding or processing in the field where the suction apparatus is moved from one work position to another frequently. Thus, it is not versatile. Versatility or reduction in size of the suction apparatus is not particularly described in PTL 1 or PTL 2.

The present invention has been made in view of the above-described situation, and an object of the present invention is to provide a suction apparatus that has good maintainability, is simply structured, small in size, and highly versatile. The present invention also provides a suction method, a welding system, a welding method, and an additive manufacturing method.

### Solution to Problem

The above-described object of the present invention is achieved by a configuration of [1] below relating to a suction apparatus.
[1] A suction apparatus that suctions a gas or an aerosol, the suction apparatus including
   an inlet via which a compressed gas flows in,
   a suction/ejection opening via which the gas or the aerosol is suctioned or via which the compressed gas is ejected,
   an ejector that has a drive opening, an intake opening, and an outlet,
   a first path that includes a pipe member which connects the inlet and the drive opening of the ejector to each other,
   a second path that includes a pipe member which connects the suction/ejection opening and the intake opening of the ejector to each other,
   a third path that includes a pipe member which connects the inlet and the suction/ejection opening to each other, and
   a path switching unit that is disposed between the second path and the third path and that switches a connection between the second path and the third path.
   When the second path is connected by the path switching unit, the gas or the aerosol is suctioned via the suction/ejection opening by means of the first path and the second path, and,
   when the third path is connected by the path switching unit, the compressed gas is ejected via the suction/ejection opening by means of the third path.
   The above-described object of the present invention is achieved by a configuration of [2] below relating to a suction method.
[2] A suction method for suctioning a gas or an aerosol by using a suction apparatus.
   The suction apparatus includes
   an inlet via which a compressed gas flows in,
   a suction/ejection opening via which the gas or the aerosol is suctioned or via which the compressed gas is ejected,
   an ejector that has a drive opening, an intake opening, and an outlet,
   a first path that includes a pipe member which connects the inlet and the drive opening of the ejector to each other,
   a second path that includes a pipe member which connects the suction/ejection opening and the intake opening of the ejector to each other, and
   a third path that includes a pipe member which connects the inlet and the suction/ejection opening to each other.
   A suction function and an ejection function of the suction/ejection opening are switched by switching a connection between the second path and the third path.
   When the second path is connected, the gas or the aerosol is suctioned via the suction/ejection opening by means of the first path and the second path, and,
   when the third path is connected, the compressed gas is ejected via the suction/ejection opening by means of the third path.
   The above-described object of the present invention is achieved by a configuration of [3] below relating to a welding system.
[3] A welding system includes a welding torch that includes a shield gas supply nozzle through which a shield gas is supplied to a weld zone and a suction nozzle through which the shield gas is suctioned, and
   a suction apparatus that suctions a gas or an aerosol.
   The suction apparatus includes
   an inlet via which a compressed gas flows in,
   a suction/ejection opening via which the gas or the aerosol is suctioned or via which the compressed gas is ejected,
   an ejector that has a drive opening, an intake opening, and an outlet,
   a first path that includes a pipe member which connects the inlet and the drive opening of the ejector to each other,
   a second path that includes a pipe member which connects the suction/ejection opening and the intake opening of the ejector to each other,
   a third path that includes a pipe member which connects the inlet and the suction/ejection opening to each other, and
   a path switching unit that is disposed between the second path and the third path and that switches a connection between the second path and the third path.
   When the second path is connected by the path switching unit, the gas or the aerosol is suctioned via the suction/ejection opening by means of the first path and the second path, and,
   when the third path is connected by the path switching unit, the compressed gas is ejected via the suction/ejection opening by means of the third path.
   The suction nozzle of the welding torch is connected to the suction/ejection opening of the suction apparatus.

### Advantageous Effects of Invention

According to the present invention, the suction apparatus that has good maintainability, is simply structured, small in size, and highly versatile can be provided. The suction method, the welding system, the welding method, and the additive manufacturing method are also provided.

### Brief Description of Drawings

[Fig. 1] Fig. 1 is a diagram illustrating an example of the configuration of a suction apparatus according to an embodiment.
[Fig. 2] Fig. 2 is a diagram illustrating an ejector according to the embodiment.
[Fig. 3] Fig. 3 (a) is a side view of a housing that accommodates elements of the suction apparatus, and Fig. 3 (b) is a front view of the housing.
[Fig. 4] Figs. 4 (a) to 4 (g) are diagrams in each of which a filter according to a variant is seen in the thickness direction.
[Fig. 5] Figs. 5 (a) to 5 (c) are diagrams in each of which a filter according to a variant is seen in the thickness direction.
[Fig. 6] Figs. 6 (a) to 6 (c) are diagrams in each of which a filter according to a variant is seen in the thickness direction.
[Fig. 7] Fig. 7 is a schematic diagram of a suction apparatus start control unit.
[Fig. 8] Fig. 8 is a schematic diagram of an anomaly detection unit.
[Fig. 9] Fig. 9 is a diagram illustrating a pressure loss member disposed in a pipe member.
[Fig. 10] Fig. 10 is a diagram illustrating an example of a general configuration of a welding system.
[Fig. 11] Fig. 11 is a sectional view taken along line XI-XI of Fig. 10.

### Description of Embodiments

Hereinafter, an embodiment of a suction apparatus, a suction method, a welding system, a welding method, and an additive manufacturing method according to the present invention is described with reference to the accompanying drawings. The drawings are created for description of the present invention, and the embodiment of the present invention is not limited to the content illustrated in the drawings.

### <Suction Apparatus>

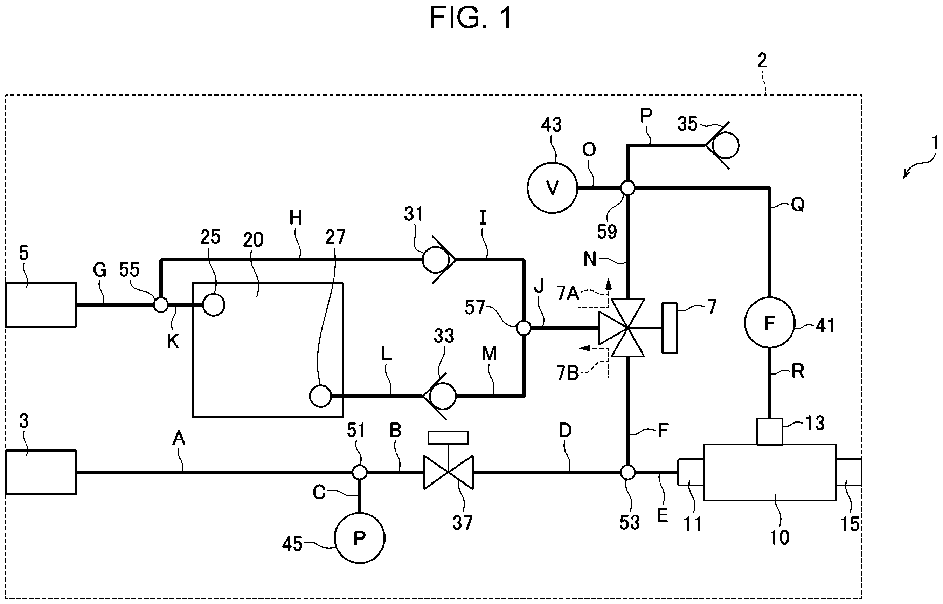

Fig. 1 is a diagram illustrating an example of the configuration of a suction apparatus 1 according to the embodiment. The suction apparatus 1 illustrated in Fig. 1 is used for various types of apparatuses such as a processing machine, a welding apparatus, and an additive manufacturing apparatus and suctions gas and aerosol which are foreign matter generated by these apparatuses. For example, when the suction apparatus 1 is used in the processing machine, the suction apparatus 1 suctions smoke, dust, and the like generated from an object to be processed. Furthermore, when the suction apparatus 1 is used in the welding apparatus or the additive manufacturing apparatus, the suction apparatus 1 suctions gas containing a hydrogen source released from welding wires, fumes generated by evaporation of metal and an oxide due to high-temperature arcs, and the like.

The suction apparatus 1 includes an inlet 3 via which a compressed gas flows in, a suction/ejection opening 5 via which gas or aerosol is suctioned or via which compressed gas is ejected due to path switching to be described later, a path switching unit 7, an ejector 10, a filter 20, a check valves 31, 33, and 35, a solenoid valve 37, a flowmeter 41, a vacuum gage 43, a pressure gage 45, branch pipes 51, 53, 55, 57, and 59, pipe members A to R which connect these components, and a housing 2 which accommodates these components.

The type, diameter, material, and the like of the pipe members A to R are not particularly specified. It is sufficient that the pipe members A to R be general pipe members formed of rubber or resin. Examples of the pipe members include, for example, steel pipes, hoses, tubes, and the like. The pipe member A connects the inlet 3 and the branch pipe 51 to each other. The pipe member B connects the branch pipe 51 and the solenoid valve 37 to each other. The pipe member C connects the branch pipe 51 and the pressure gage 45 to each other. The pipe member D connects the solenoid valve 37 and the branch pipe 53 to each other. The pipe member E connects the branch pipe 53 and a drive opening 11 of the ejector 10 to each other. The pipe member F connects the branch pipe 53 and the path switching unit 7 to each other. The pipe member G connects the suction/ejection opening 5 and the branch pipe 55 to each other. The pipe member H connects the branch pipe 55 and the check valve 31 to each other. The pipe member I connects the check valve 31 and the branch pipe 57 to each other. The pipe member J connects the branch pipe 57 and the path switching unit 7 to each other. The pipe member K connects the branch pipe 55 and the filter 20 to each other. The pipe member L connects the filter 20 and the check valve 33 to each other. The pipe member M connects the check valve 33 and the branch pipe 57 to each other. The pipe member N connects the path switching unit 7 and the branch pipe 59 to each other. The pipe member O connects the branch pipe 59 and the vacuum gage 43 to each other. The pipe member P connects the branch pipe 59 and the check valve 35 to each other. The pipe member Q connects the branch pipe 59 and the flowmeter 41 to each other. The pipe member R connects the flowmeter 41 and an intake opening 13 of the ejector 10 to each other. Substantially no obstacle for fluid exists at intersections of paths in the drawing.

A path that connects the inlet 3 and the drive opening 11 of the ejector 10 to each other and that includes the pipe members A, B, D, and E is referred to as a first path. A path that connects the suction/ejection opening 5 and the intake opening 13 of the ejector 10 to each other and that includes the pipe members G, K, L, M, J, N, Q, and R is referred to as a second path. A path that connects the inlet 3 and the suction/ejection opening 5 to each other and that includes the pipe members A, B, D, F, J, I, H, and G is referred to as a third path. The first path and the third path share part of the path with each other. Specifically, the first path and the third path share the pipe members A, B, and D with each other. The second path and the third path share part of the path with each other. Specifically, the second path and the third path share the pipe members G and J with each other.

The first to third paths each include some of pipe members out of the pipe members A to R. Each of the plurality of pipe members A to R is detachable. Accordingly, compared to the case where each of the first to third paths is configured with a single pipe member, ease of attachment/detachment of the pipe members A to R increases. This improves the maintainability.

In particular, according to the present embodiment, foreign matter such as dust is suctioned via the suction/ejection opening 5. Thus, the pipe members G, K, and H disposed near the suction/ejection opening 5 is easily fouled. However, since the pipe members G, K, and H are each independently detachable, only the pipe member G, K, or H that requires maintenance can be detached and cleaned or replaced. Furthermore, the entire length of the illustrated pipe member H is comparatively large. Thus, only a portion of the pipe member H near the suction/ejection opening 5 out of the entirety of the pipe member H tends to be fouled. Accordingly, the pipe member H may be divided into a plurality of pipe members connected each other through a joint so as to have a configuration that increases ease of replacement of only the fouled portion.

The inlet 3 is an input portion via which a compressed gas for allowing the suction apparatus 1 to exhibit a suction function or an ejection function flows in. As will be described later, the suction apparatus 1 can switch between the suction function and the ejection function with a simple configuration. Although the type of the compressed gas to be input is not particularly specified, generally, compressed air is preferably used from the viewpoint of the cost. The gage pressure of the compressed gas is preferably within a range from 0.2 to 1.0 MPa. The gage pressure of the compressed gas is measured by the pressure gage 45.

The suction/ejection opening 5 performs suction as its main function and is used by being connected to various types of end effectors. For example, when the suction apparatus 1 is used in the welding apparatus, the suction/ejection opening 5 is connected to a welding torch. As described above, this suction/ejection opening 5 is an output portion a main object of which is suction. However, for cleaning the inside of a pneumatic circuit, the compressed gas can be ejected via the suction/ejection opening 5 by path switching, which will be described later. Thus, paths fouled with dust, a hydrogen source, fumes, and the like that have been deposited can be cleaned. Since this cleaning function can reduce the frequency of overhauling of the suction apparatus 1, the maintainability is improved.

The path switching unit 7 is disposed between the second path and the third path and switches a connection between the second path and the third path to switch the function in the suction/ejection opening 5 between the suction function and the ejection function. The path switching unit 7 according to the present embodiment switches to a path 7A that connects the pipe members N and J to each other so as to exhibit the suction function and switches to a path 7B that connects the pipe members F and J to each other so as to exhibit the ejection function. From the viewpoint of size reduction of the apparatus, the path switching unit 7 is preferably limited to a single position in the pneumatic circuit. As the path switching unit, a general-purpose switching valve is preferably applied.

The ejector 10 is an apparatus that generates negative pressure by utilizing a phenomenon in which air around the nozzle is suctioned to reduce the pressure when the compressed gas is jetted through a nozzle at high speed. In general, the ejector has three openings including a drive opening via which the compressed gas flows in, an intake opening on which a suction action acts due to the high-speed jetting of the compressed gas, and an outlet via which fluid having flowed in via the drive opening and the intake opening is discharged to the outside.

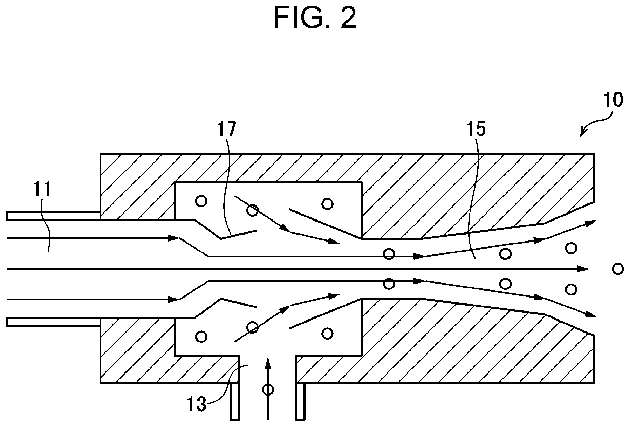

Fig. 2 illustrates the ejector 10 according to the embodiment. The ejector 10 has the drive opening 11 connected to the inlet 3 through the pipe members A, B, D, and E (first path), the intake opening 13 connected to the suction/ejection opening 5 through the pipe members G, K, L, M, J, N, Q, and R (second path), and an outlet 15 connected to the outside. The ejector 10 is a T pipe and has the function of a general ejector. That is, when a drive gas such as a compressed air is horizontally flowed in from the drive opening 11, the flow rate increases by a nozzle 17 that is a portion where the diameter is reduced in the pipe. The pipe corresponding to a vertical line of the character T serves as the intake opening 13, and gas or aerosol is suctioned via the intake opening 13.

Fouling substances in the gas or aerosol suctioned via the intake opening 13 have been removed by the filter 20 disposed in the second path. More specifically, the filter 20 is used to remove substances that foul the pneumatic circuit from the gas or aerosol suctioned via the suction/ejection opening 5. The gas to be suctioned includes, for example, a shielding gas containing vaporized gas of a hydrogen source. Since the hydrogen source is oil content or water content, the hydrogen source may condense in the pneumatic circuit. The aerosol to be suctioned includes, for example, an aerosol containing liquid particles of the hydrogen source, fumes, dust, and the like. Furthermore, when the condensed liquid of the hydrogen source, the fumes, and the dust are mixed within the narrow pneumatic circuit, the likelihood of the mixture sticking to and blocking the circuit increases. Accordingly, the filter 20 is preferably disposed near the suction/ejection opening 5. In the example illustrated in Fig. 1, the filter 20 is connected to the pipe member K near the suction/ejection opening 5.

The gas or aerosol from which the fouling substances have been removed by the filter 20 is suctioned by the intake opening 13 of the ejector 10 and delivered to the outlet 15 by the drive gas so as to be discharged to the outside. As described above, the ejector 10 has a simple structure and a long life and does not require a power source. Thus, it can be said that the ejector 10 is optimum for simplification of the pneumatic circuit and the size reduction of the apparatus.

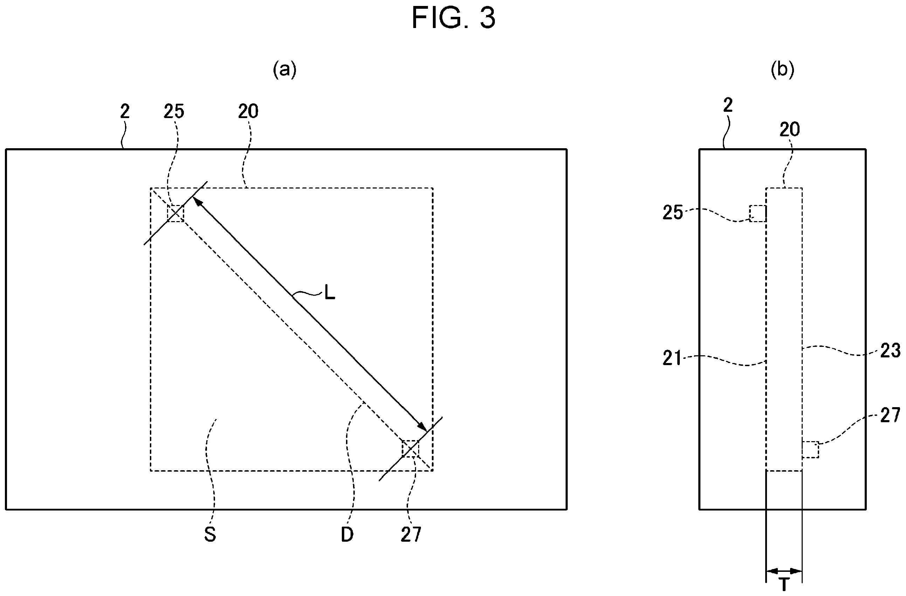

Fig. 3 (a) illustrates a side view of the housing 2 that accommodates elements of the suction apparatus 1. Fig. 3 (b) illustrates a front view of the housing 2 that accommodates the elements of the suction apparatus 1. Although it is not illustrated in Fig. 3 (b), various types of control switches, the instruments including the flowmeter 41, the vacuum gage 43, the pressure gage 45, and the like, the inlet 3, the suction/ejection opening 5, and so forth of the suction apparatus 1 may be disposed in a front surface of the housing 2. In Figs. 3 (a) and 3 (b), the filter 20 installed in a case (not illustrated) in the housing 2 is indicated by broken lines. The shape of the filter 20 is a rectangular parallelepiped in the illustrated example.

The filter 20 has a first surface 21 and a second surface 23 that face each other in the thickness direction thereof (depth direction of the sheet of Fig. 3 (a), left-right direction of Fig. 3 (b)). An entrance 25 via which the gas or aerosol suctioned via the suction/ejection opening 5 flows in is disposed so as to be near the first surface 21 and face the first surface 21. An exit 27 via which the gas or aerosol having passed through the filter 20 flows out is disposed so as to be near the second surface 23 and face the second surface 23. The entrance 25 and the exit 27 are holes provided in a case member (not illustrated) that accommodates the filter 20. The entrance 25 is connected to the pipe member K, and the exit 27 is connected to the pipe member L. For efficiently collecting the fumes, dust, and the like with the filter 20, the length of a distance L between the entrance 25 and the exit 27 in a plane perpendicular to the thickness direction of the filter 20 is preferably sufficiently large. The distance L is preferably greater than or equal to 10 cm, more preferably greater than or equal to 15 cm, still more preferably greater than or equal to 18 cm. When the shape of the filter 20 seen in the thickness direction is rectangular as illustrated in Fig. 3 (a), disposing the entrance 25 and the exit 27 on a diagonal line D of the rectangle is desirable because this can increase the distance L between the entrance 25 and the exit 27.

From the viewpoints of improvement of the maintainability by increasing the life of the filter 20 and the size reduction of the apparatus, the filter 20 preferably has a shape having a small thickness T in the thickness direction and a larger area S seen in the thickness direction. More specifically, the thickness T is preferably smaller than or equal to 7.0 cm, more preferably smaller than or equal to 4.5 cm, still more preferably smaller than or equal to 3.0 cm. The area S is preferably greater than or equal to 100 cm², more preferably greater than or equal to 150 cm², still more preferably greater than or equal to 250 cm². A ratio S/T between the area S seen in the thickness direction and the thickness T in the thickness direction is preferably greater than or equal to 10, more preferably greater than or equal to 25, still more preferably greater than or equal to 50.

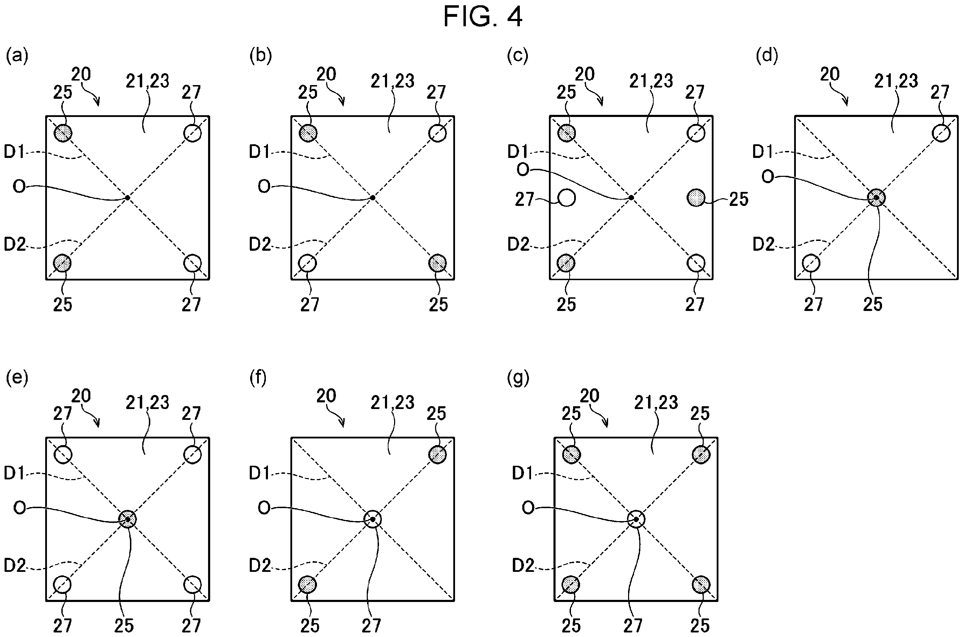

Neither the number of entrances 25 nor the number of exits 27 is limited to one. A plurality of entrances 25 and a plurality or exits 25 may be provided. Figs. 4 (a) to 4 (g) are diagrams in each of which the filter 20 according to a variant is seen in the thickness direction. The filter 20 illustrated in Figs. 4 (a) to 4 (g) has a rectangular parallelepiped shape similarly to the filter 20 illustrated in Figs. 3 (a) and 3 (b). However, the filter 20 illustrated in Figs. 4 (a) to 4 (g) are different from the filter 20 illustrated in Figs. 3 (a) and 3 (b) in that the numbers and disposition of the entrance 25 provided for the first surface 21 and the exit 27 provided for the second surface 23 are different. In Figs. 4 (a) to 4 (g), the entrances 25 are indicated by solid circles, and the exits 27 are indicated by hollow circles. Furthermore, out of two diagonal lines D1 and D2 of the rectangular shape of the first surface 21 and the second surface 23 of the filter 20, a diagonal line extending from upper left to lower right is referred to as a first diagonal line D1, and a diagonal line extending from lower left to upper right is referred to as a second diagonal line D2.

In the filter 20 illustrated in Fig. 4 (a), two entrances 25 and two exits 27 are disposed. The two entrances 25, 25 are respectively disposed at an upper left portion of the first diagonal line D1 and a lower left portion of the second diagonal line D2. The two exits 27, 27 are respectively disposed at a lower right portion of the first diagonal line D1 and an upper right portion of the second diagonal line D2. That is, the entrance 25, entrance 25, exit 27, and exit 27 are disposed in this order at four corners of the rectangular shape of the first surface 21 and the second surface 23 seen in the thickness direction.

In the filter 20 illustrated in Fig. 4 (b), two entrances 25 and two exits 27 are disposed. The two entrances 25, 25 are respectively disposed at the upper left portion and the lower right portion of the first diagonal line D1. The two exits 27, 27 are respectively disposed at the lower left portion and the upper right portion of the second diagonal line D2. That is, the entrance 25, exit 27, entrance 25, and exit 27 are disposed in this order at the four corners of the rectangular shape of the first surface 21 and the second surface 23 seen in the thickness direction.

In the filter 20 illustrated in Fig. 4 (c), three entrances 25 and three exits 27 are disposed. Two of the three entrances 25, 25 are respectively disposed at the upper left portion of the first diagonal line D1 and the lower left portion of the second diagonal line D2. Two of the three exits 27, 27 are respectively disposed at the upper right portion of the first diagonal line D1 and the lower right portion of the second diagonal line D2. That is, the entrance 25, entrance 25, exit 27, and exit 27 are disposed in this order at the four corners of the rectangular shape of the first surface 21 and the second surface 23 seen in the thickness direction. Furthermore, the remaining one of the entrances 25 is disposed at an intermediate portion between the two exits 27, 27 and the remaining one of the exits 27 is disposed at an intermediate portion between the two entrances 25, 25.

In the filter 20 illustrated in Fig. 4 (d), a single entrance 25 and two exits 27 are disposed. The entrance 25 is disposed in a center O of the rectangular shape where the first diagonal line D1 and the second diagonal line D2 intersect each other. The two exits 27, 27 are respectively disposed at the lower left portion and the upper right portion of the second diagonal line D2. That is, the entrance 25 is disposed in a center between the two exits 27, 27 on the second diagonal line D2.

In the filter 20 illustrated in Fig. 4 (e), a single entrance 25 and four exits 27 are disposed. The entrance 25 is disposed in the center O of the rectangular shape where the first diagonal line D1 and the second diagonal line D2 intersect each other. The four exits 27, 27, 27, 27 are respectively disposed at the upper left portion and the lower right portion of the first diagonal line D1 and the lower left portion and the upper right portion of the second diagonal line D2. That is, the four exits 27, 27, 27, 27 are disposed at the four corners of the rectangular shape of the first surface 21 and the second surface 23 seen in the thickness direction, and the entrance 25 is disposed in a center of these four exits 27, 27, 27, 27.

In the filter 20 illustrated in Fig. 4 (f), two entrances 25 and a single exit 27 are disposed. The two entrances 25, 25 are respectively disposed at the lower left portion and the upper right portion of the second diagonal line D2. The exit 27 is disposed in the center O of the rectangular shape where the first diagonal line D1 and the second diagonal line D2 intersect each other. That is, the exit 27 is disposed in a center between the two entrances 25, 25 on the first diagonal line D1.

In the filter 20 illustrated in Fig. 4 (g), four entrances 25 and a single exit 27 are disposed. The four entrances 25, 25, 25, 25 are respectively disposed at the upper left portion and the lower right portion of the first diagonal line D1 and the lower left portion and the upper right portion of the second diagonal line D2. The exit 27 is disposed in the center O of the rectangular shape where the first diagonal line D1 and the second diagonal line D2 intersect each other. That is, the four entrances 25, 25, 25, 25 are disposed at the four corners of the rectangular shape of the first surface 21 and the second surface 23 seen in the thickness direction, and the exit 27 is disposed in a center of these four entrances 25, 25, 25, 25.

With the filter 20 illustrated in Figs. 4 (a) to 4 (g), a permeation volume of the fluid flowing from the entrance 25 toward the exit 27 can be increased, and accordingly, the fumes, the dust, and the like can be efficiently collected.

The shape of the filter 20 is not limited to the rectangular parallelepiped shape as illustrated in Figs. 3 (a) and 3 (b) and Figs. 4 (a) to 4 (g). An arbitrary shape can be selected as the shape of the filter 20. For example, the filter 20 may have a cylindrical shape or a rectangular column shape.

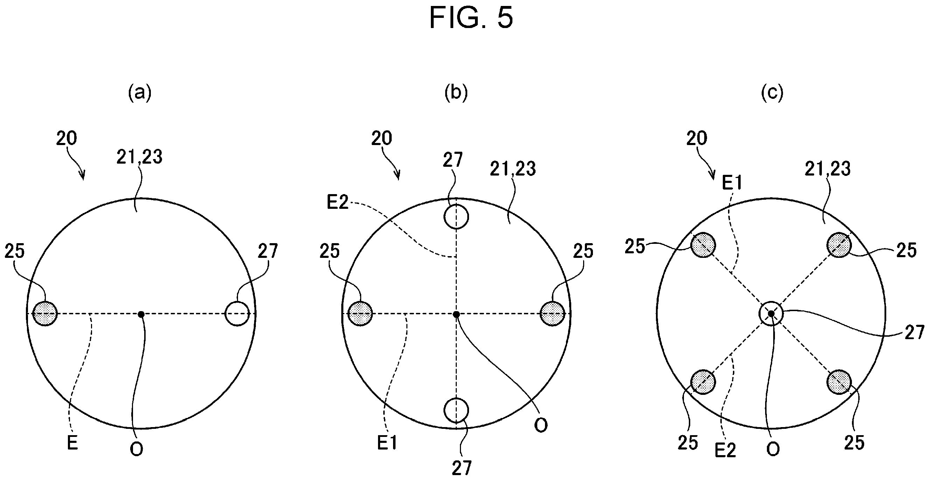

Figs. 5 (a) to 5 (c) are diagrams in each of which the filter 20 according to a variant is seen in the thickness direction. The filter 20 illustrated in Figs. 5 (a) to 5 (c) has a cylindrical shape, and the first surface 21 and the second surface 23 seen in the thickness direction have a circular shape.

In the filter 20 illustrated in Fig. 5 (a), a single entrance 25 and a single exit 27 are disposed. The entrance 25 and the exit 27 are disposed at both end portions on a diameter E of the circular shape of the filter 20 seen in the thickness direction. That is, the entrance 25 and the exit 27 are disposed with a 180-degree phase in the circumferential direction.

Fig. 5 (b) illustrates two diameters E1 and E2 of the circular shape of the filter 20 seen in the thickness direction. These two diameters E1 and E2 perpendicularly intersect each other in a center O. In this filter 20, two entrances 25 and two exits 27 are disposed. The two entrances 25, 25 are disposed at both end portions of one diameter E1, and the two exits 27, 27 are disposed at both end portions of the other diameter E2. That is, the entrances 25 and the exits 27 are alternately disposed with a 90-degree phase in the circumferential direction.

Fig. 5 (c) illustrates the two diameters E1 and E2 of the circular shape of the filter 20 seen in the thickness direction. These two diameters E1 and E2 perpendicularly intersect each other in the center O. In the filter 20, four entrances 25 and a single exit 27 are disposed. Two of the entrances 25, 25 are disposed at both end portions of the one diameter E1, and the other two entrances 25, 25 are disposed at both end portions of the other diameter E2. The exit 27 is disposed in the center O. That is, the four entrances 25, 25, 25, 25 are disposed with a 90-degree phase in the circumferential direction, and the exit 27 is disposed in a center of these entrances 25, 25, 25, 25.

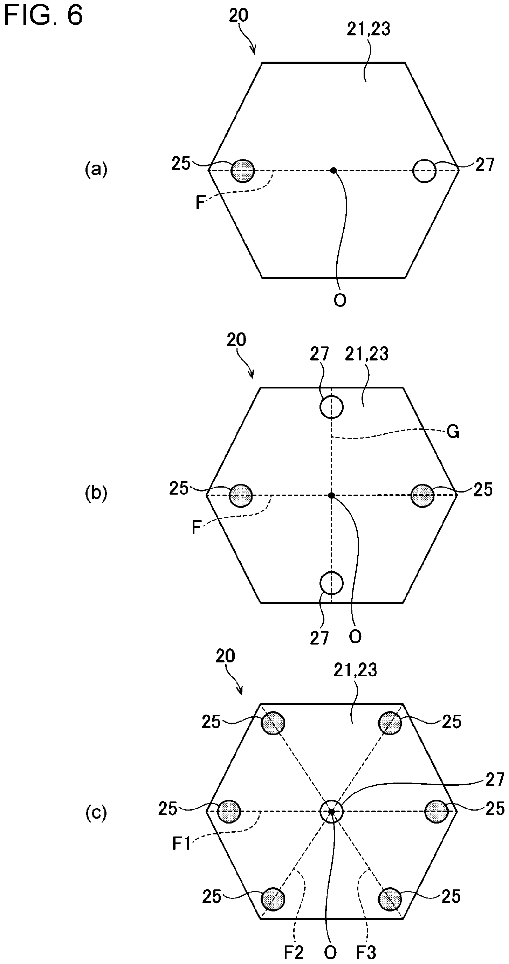

Figs. 6 (a) to 6 (c) are diagrams in each of which the filter 20 according to a variant is seen in the thickness direction. The filter 20 illustrated in Figs. 6 (a) to 6 (c) has a hexagonal column shape, and the first surface 21 and the second surface 23 seen in the thickness direction have a hexagonal shape.

In the filter 20 illustrated in Fig. 6 (a), a single entrance 25 and a single exit 27 are disposed. The entrance 25 and the exit 27 are disposed at both end portions of a diagonal line F connecting vertices, to each other, of the hexagonal shape of the filter 20 seen in the thickness direction. These vertices are 180-degree out of phase with each other. That is, the entrance 25 and the exit 27 are disposed with a 180-degree phase in the circumferential direction.

Fig. 6 (b) illustrates a perpendicularly intersecting line G that perpendicularly intersects the diagonal line F in the center O in the hexagonal shape of the filter 20 seen in the thickness direction. In this filter 20, two entrances 25 and two exits 27 are disposed. The two entrances 25, 25 are disposed at both end portions of the diagonal line F, and the two exits 27, 27 are disposed at both end portions of the perpendicularly intersecting line G. That is, the two entrances 25, 25 and the two exits 27, 27 are alternately disposed with a 90-degree phase in the circumferential direction.

Fig. 6 (c) illustrates three first to third diagonal lines F1, F2, and F3 that connects vertices of the hexagonal shape of the filter 20 seen in the thickness direction. The vertices connected to each other are 180-degree out of phase with each other. In the filter 20, six entrances 25 and a single exit 27 are disposed. Two of the entrances 25, 25 are disposed at both end portions of the first diagonal line F1, two of the entrances 25, 25 are disposed at both end portions of the second diagonal line F2, and two of the entrances 25, 25 are disposed at both end portions of the third diagonal line F3. The exit 27 is disposed in the center O. That is, the six entrances 25 are disposed with a 60-degree phase in the circumferential direction, and the exit 27 is disposed in a center of these entrances 25.

With the filter 20 of Figs. 5 (a) to 5 (c) and Figs. 6 (a) to 6 (c) as described above, the permeation volume of the fluid flowing from the entrance 25 toward the exit 27 can be increased, and accordingly, the fumes, the dust, and the like can be efficiently collected.

It is desired that, also for the filter 20 of Figs. 4 (a) to 4 (g), Figs. 5 (a) to 5 (c), and Figs. 6 (a) to 6 (c), the distance L between the entrance 25 and the exit 27, the thickness T of the filter 20, the area S of the filter 20, and the ratio S/T fall within preferable ranges described above with reference to Figs. 3 (a) and 3 (b).

The check valves 31, 33, and 35 are used to limit the directions of the fluid to a single direction in the pneumatic circuit. According to the present embodiment, the check valve 31 allows only the flow of the fluid from the pipe member I toward the pipe member H, the check valve 33 allows only the flow of the fluid from the pipe member L toward the pipe member M, and the check valve 35 allows only the flow of the fluid from the pipe member P toward the outside of the pneumatic circuit.

The solenoid valve 37 is disposed near the inlet 3. According to the present embodiment, the solenoid valve 37 is connected to the inlet 3 through the pipe members A and B. The suction apparatus 1 may include a suction apparatus start control unit 70 that controls starting and stopping of suction by controlling the opening/closing of the solenoid valve 37.

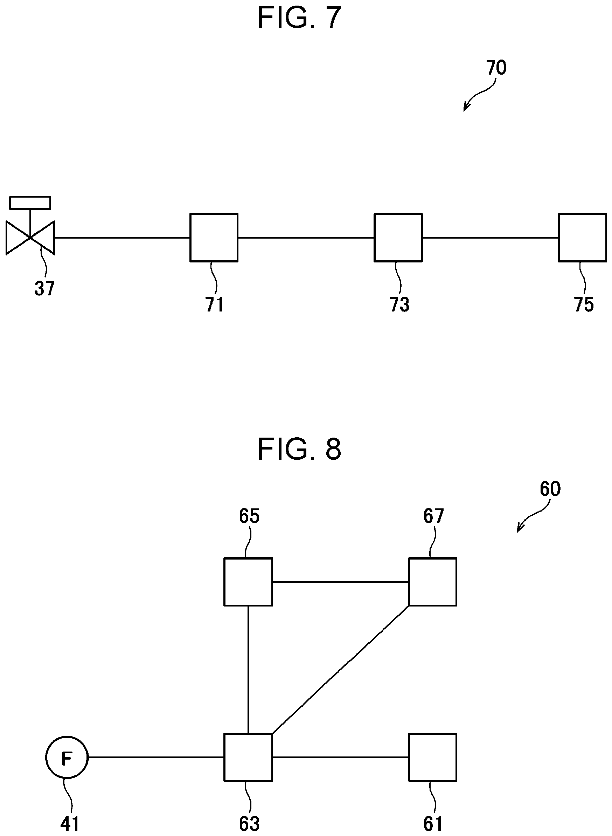

As illustrated in Fig. 7, the suction apparatus start control unit 70 may include a reception device 71 that receives signals notifying of starting or stopping of operations performed by various apparatuses, a determination device 73 that generates a start stop signal of the suction apparatus 1 based on the signals received by the reception device, the solenoid valve 37 that controls supply of the compressed gas to the ejector 10, and a solenoid valve drive apparatus 75 that drives the solenoid valve 37 based on the start stop signal generated by the determination device 73.

For example, when the suction apparatus 1 is used in the welding apparatus, an arc start signal output from a welding power source is input to the suction apparatus start control unit 70 to open/close the solenoid valve 37. At the time when welding is started, the suction apparatus start control unit 70 opens the solenoid valve 37 for supplying the compressed gas to the ejector 10 to control so as to start the suction. At the time when the welding is stopped or at the time a little later than stopping of the welding, the suction apparatus start control unit 70 closes the solenoid valve 37 for stopping the supplying of the compressed gas to the ejector 10 to control so as to stop the suction. Thus, the compressed gas is consumed only when the compressed gas is necessary, and accordingly, the amount of consumption of the compressed gas is reduced.

The instruments used according to the present embodiment include the flowmeter 41, the vacuum gage 43, and the pressure gage 45. However, this is not limiting, and instruments may be added according to need. The flowmeter 41 and the vacuum gage 43 can be used to grasp the amount of suction of the gas or aerosol via the suction/ejection opening 5, and the pressure gage 45 can be used to grasp the amount of consumption of the compressed gas via the inlet 3 and a drive power that generates a suction power.

The flowmeter 41 is, for example, a float-type flowmeter and preferably disposed downstream of the filter 20 in the second path. Furthermore, the flowmeter 41 preferably includes a sensor that monitors the position of a float. The suction apparatus 1 preferably includes an anomaly detection unit 60 that outputs at least one of an alarm signal and an operation forceful stop signal when reduction of the flow rate to a value smaller than or equal to a predetermined value, that is, an anomaly of an intake amount is detected by the sensor.

As illustrated in Fig. 8, the anomaly detection unit 60 includes the flowmeter 41 that outputs an analog signal or a digital signal proportional to a suction flow rate, a reference threshold setting device 61 that outputs a threshold to serving as a reference of an abnormal value of the suction flow rate by using the analog signal or a digital signal, and an anomaly determination device 63 that determines, in response to the signal of the flowmeter 41 and the signal of the reference threshold setting device 61, an anomaly and outputs the alarm signal or the operation forceful stop signal. The anomaly detection unit 60 also includes an anomaly display device 65 that communicates, in response to the signal output by the anomaly determination device 63, the anomaly through audio, tactile, or visual communicating means such as a buzzer, vibration, or warning light that generates alarms. The anomaly detection unit 60 also includes an operation stop control unit 67 having the function of stopping, in response to the operation forceful stop signal output by the anomaly determination device 63, operations of various apparatuses in which the suction apparatus 1 is used. When the suction apparatus 1 is used in the welding apparatus, the operation stop control unit 67 interrupts a torch switch signal that designates arc output by the welding torch, thereby to stop welding.

When the flowmeter 41 is of the float type, the reference threshold setting device 61 is a photosensor installed at at least one of an upper limit and a lower limit of a float position. Furthermore, a configuration in which only one of the anomaly display device 65 and the operation stop control unit 67 is provided is acceptable. Use of such an anomaly detection unit 60 suppresses continuation of operation performed by an operator while the operator does not notice the anomaly of the suction amount.

### <Path of Suction Apparatus>

According to the present embodiment, at least the first path that connects the inlet 3 and the drive opening 11 of the ejector 10 and that includes the pipe members A, B, D, and E, the second path that connects the suction/ejection opening (5) and the intake opening 13 of the ejector 10 and that includes pipe members G, K, L, M, J, N, Q, and R, and the third path that connects the inlet (3) and the suction/ejection opening (5) and that includes the pipe members A, B, D, F, J, I, H, and G are provided in the pneumatic circuit in the suction apparatus 1. Hereinafter, with reference to Fig. 1, a method of switching between a path for the case of the suction action occurring in the suction/ejection opening 5 and a path for the case of the ejection action occurring in the suction/ejection opening 5 is described.

### <Suction Path>

The pneumatic circuit that suctions the gas or aerosol via the suction/ejection opening 5 and guides the gas or aerosol to the intake opening 13 of the ejector 10 at least includes the first path that causes the ejector 10 to act and the second path that serves as a suction path. The first path is routed through a path connected by the pipe members denoted by A, B, D, and E in Fig. 1. Accordingly, the first path serves as a path though which the compressed air flows into the drive opening 11 of the ejector 10 when, in the path switching unit 7, the path 7A is opened to connect the second path and the path 7B is closed to not to connect the third path.

The second path is routed through a path connected by the pipe members denoted by G, K, L, M, J, N, Q, and R in Fig. 1. When, in the path switching unit 7, the path 7A is opened to connect the second path and the path 7B is closed not to connect the third path, the pipe member N is connected to the pipe member J. The pipe member J is connected to the path switching unit 7 and the branch pipe 57. The branch pipe 57 is connected to the check valve 31 through the pipe member I and the check valve 33 through the pipe member M. The check valve 31 is connected to the suction/ejection opening 5 through the pipe member H, the branch pipe 55, and the pipe member G. The check valve 33 is connected to the suction/ejection opening 5 through the pipe member L, the filter 20, the pipe member K, the branch pipe 55, and the pipe member G. Here, the check valve 31 allows only the flow of the fluid from the pipe member I toward the pipe member H, and the check valve 33 allows only the flow of the fluid from the pipe member L toward the pipe member M. Accordingly, when the path 7A of the path switching unit 7 is in an open state and the suction via the intake opening 13 of the ejector 10 is performed, the gas or the aerosol suctioned via the suction/ejection opening 5 is guided to the intake opening 13 of the ejector 10 not through a path including the pipe member G, the branch pipe 55, the pipe member H, and the check valve 31 but through a path including the pipe member G, the branch pipe 55, the pipe member K, the filter 20, the pipe member L, and the check valve 33. In this manner, the gas or aerosol is suctioned via the suction/ejection opening 5.

### <Ejection Path>

An ejection path to eject the drive gas such as the compressed air via the suction/ejection opening 5 includes at least the third path. The third path is routed through a path connected by the pipe members A, B, D, F, J, I, H, and G. That is, the third path serves as a path though which the compressed gas flows into the pipe member J not through the ejector 10 but through the path 7B of the path switching unit 7 when, in the path switching unit 7, the path 7A is closed not to connect the second path and the path 7B is opened to connect the third path. Also in this case, a path through which the compressed gas flows into the drive opening 11 of the ejector 10 through the pipe member E is formed. However, since the ejector 10 is a mechanism to jet the compressed gas at high speed through the nozzle 17 that is the portion where the diameter is reduced in the pipe (see Fig. 2), pressure loss is large. Thus, when there exists an escape route of the gas where the pressure loss is small, the amount of the fluid passing through the nozzle 17 reduces. Accordingly, most of the compressed gas having reached the branch pipe 53 flows to the direction of the pipe member F.

The pipe member J is connected to the check valve 31 through the pipe member I and the check valve 33 through the pipe member M. Here, the check valve 31 allows only the flow of the fluid from the pipe member I toward the pipe member H, and the check valve 33 allows only the flow of the fluid from the pipe member L toward the pipe member M. Accordingly, when the ejection is performed via the suction/ejection opening 5 while the path 7B of the path switching unit 7 is in the open state, the compressed gas reaches the suction/ejection opening 5 not through a path of the pipe member M, the check valve 33, the pipe member L, the filter 20, and the pipe members K and G but through a path of the pipe member I, the check valve 31, and the pipe members H and G. In this manner, the compressed gas flowing via the inlet 3 is ejected via the suction/ejection opening 5.

### <Path Switching>

The path switching unit 7 is disposed between the second path and the third path and switches between the path 7A to which the pipe member N and the pipe member J in the second path are connected and the path 7B to which the pipe member F and the pipe member J in the second path are connected, thereby to switch the connection between the second path and the third path. As described above, with a single path switching unit 7, the suction path and the ejection path can be easily switched. For realizing a simple pneumatic circuit, a general-purpose switching valve is preferably used as the path switching unit 7. However, when the general-purpose switching valve is used, there may be a timing at which the pipe members F, J, and N in three directions are simultaneously connected during the path switching. Consequently, there may be a risk of causing failure in the instruments such as the vacuum gage 43 and the like due to a shock caused by an instantaneous change in the pressure of the second path from a negative pressure to a positive pressure when the compressed gas flows into the pipe member N of the second path during the path switching.

Accordingly, preferably in a path out of the second path in which the vacuum gage 43 is disposed, that is, between paths connecting from the flowmeter 41 to the path switching unit 7 according to the present embodiment, it is preferable that the check valve 35 that allows the flow of the fluid only in the flowing direction to the outside the pneumatic circuit be provided and/or a pressure loss member be provided in the pipe member O connected to the vacuum gage 43.

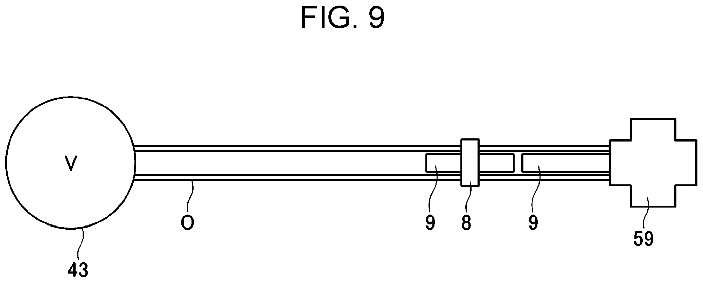

Although the shape, material, or the like of the pressure loss member is not particularly limited as long as the pressure loss member can increase the pressure loss in the pipe member O, for example, a hexagon socket set screw 9 is applied as the pressure loss member. Fig. 9 illustrates the pipe member O connecting the vacuum gage 43 and the branch pipe 59 to each other. In an example illustrated in Fig. 9, a pair of hexagon socket set screws 9, 9 are inserted into the pipe member O from the branch pipe 59 side. The hexagon socket set screw 9 on the vacuum gage 43 side is secured to the pipe member O at the circumference of the hexagon socket set screw 9 by a tightened binding band 8 or the like.

When the pressure loss member is disposed in the pipe member O as described above, even in the case where the compressed gas flows into the second path, a steep change of the pressure change in the pipe member O is suppressed, and accordingly, a failure of the vacuum gage 43 can be prevented. Furthermore, when the check valve 35 is provided, even in the case where the compressed gas flows into the second path, the compressed gas can be discharged to the outside through the check valve 35, and accordingly, a failure of the vacuum gage 43 can be prevented. Out of the pressure loss member and the check valve 35, it is more preferable to provide the check valve 35, and it is still more preferable to provide both the check valve 35 and the pressure loss member.

As has been described, with the suction apparatus 1 according to the present embodiment, the path switching unit 7 that is disposed between the second path and the third path and that switches the connection between the second path and the third path is provided. When the second path is connected by the path switching unit 7, the gas or aerosol is suctioned via the suction/ejection opening 5 by means of the first path and the second path. When the third path is connected by the path switching unit 7, the compressed gas is ejected via the suction/ejection opening 5 by means of the third path. Accordingly, the structure is simple, size is reduced, versatility is high, and the maintainability is good.

### <Welding System>

Next, an example in which the suction apparatus 1 according to the present embodiment is incorporated into a welding system 100 aimed at a welding field, in particular, suction of the hydrogen source in arc welding is described. The welding system 100 of this example may be used not only for the welding but also for additive manufacturing. That is, when the welding system 100 is applied to an additive manufacturing method, a stack object can be made by stacking layers with a weld bead formed by melting and solidifying a filler metal by using the welding system 100.

### <Example of Welding System Including Suction Apparatus 1 according to Present Invention>

The welding system 100 according to the present embodiment is an apparatus with which welding is performed by using consumable electrode-type gas-shielded arc welding. The consumable electrode (also referred to as a welding wire) represents an electrode to be melted by arc heat or Joule heating in the arc welding. The gas-shielded arc welding is a welding method in which welding is performed while a weld zone is shielded from outside air with a jetted shield gas. The welding system 100 includes the suction apparatus 1 to suction the shield gas including a hydrogen source near a wire extension of the welding wire out of the shield gas jetted to the weld zone and discharge the suctioned shield gas to the outside.

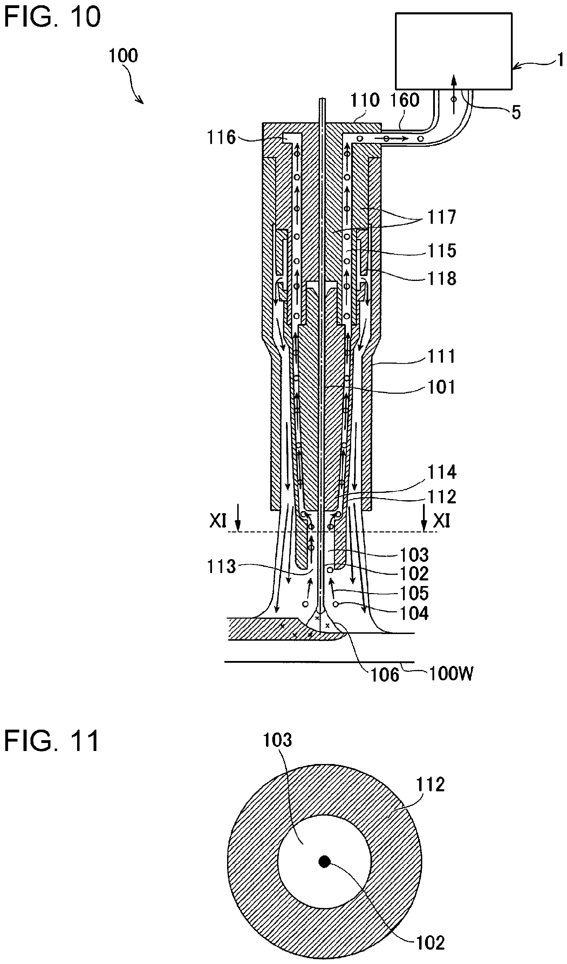

Fig. 10 is a diagram illustrating an example of a general configuration of the welding system 100 according to the present embodiment. As illustrated in Fig. 10, the welding system 100 according to the present embodiment includes a welding torch 110 that welds a work 100W by using a wire (welding wire) 101, the suction apparatus 1 that suctions the shield gas, and a suctioned shield gas path 160 through which the suctioned shield gas flows.

The welding torch 110 supplies power to the welding wire 101 with a welding current supplied from a welding power source (not illustrated) to weld the work 100W. As the welding wire 101, for example, a flux-cored wire to which metal powder and flux are added in a central portion, a metal-cored wire to which mainly metal powder is added in a central portion, or a solid wire formed by an alloy of steel and the like is used. The welding torch 110 includes a shield gas supply nozzle 111, a suction nozzle 112, a contact tip 114, a suction path 115, a tip body 117, and an orifice 118.

The orifice 118 is a throttle to make the shield gas sent from a shield gas supply apparatus uniform and disposed in the welding torch 110.

The shield gas supply nozzle 111 has a tubular shape and is fixed by being fitted onto the opening side being the lower side in Fig. 10 of the tip body 117 having a tubular shape. The shield gas is supplied to the weld zone through this shield gas supply nozzle 111. Furthermore, since the shield gas supply nozzle 111 has a tubular shape, the shield gas is supplied so as to enclose the weld zone to shield the weld zone from the outside air.

The suction nozzle 112 is disposed inside the shield gas supply nozzle 111, has a tubular shape, and is fixed by being fitted onto the opening side being the lower side in Fig. 10 of the tip body 117. Furthermore, the suction nozzle 112 has a structure that surrounds a periphery 103 of a wire projecting portion 102 of the wire 101 projecting from the contact tip 114. The suction nozzle 112 also has an opening 113 extending toward a tip end portion of the wire 101. Fig. 11 is a sectional view of the welding system 100 taken along line XI-XI of Fig. 10. As illustrated in Fig. 11, the suction nozzle 112 is disposed so as to surround the periphery 103 of the wire projecting portion 102.

Here, the suction nozzle 112 is open toward a tip end direction of the wire 101, that is, the direction where an arc 106 exists and configured so as to allow the shield gas containing a hydrogen source 104 released near the wire tip end portion to be suctioned. The suction nozzle 112 is connected to the suction/ejection opening 5 of the suction apparatus 1 through the suction path 115, which will be described later. The shield gas containing the hydrogen source 104 is suctioned by using the suction nozzle 112. As a result, the shield gas flows in the direction of an arrow 105 being a direction toward the outside of the weld zone, is suctioned, and discharged to the outside of the weld zone.

To suction the hydrogen source 104 released near the tip end portion of the wire 101, the suction nozzle 112 can be increased in length so as to be configured to surround down to the tip end portion of the wire 101. However, in this case, the suction nozzle 112 may melt due to arc heat. Accordingly, the suction nozzle 112 is configured to be open toward the tip end portion of the wire 101 with a length for which the influence of the arc heat is considered. As the suction nozzle 112, for example, a copper alloy having a good thermal conduction or ceramics having a good heat resistance is used. Furthermore, the suction nozzle 112 may be, for example, chrome-plated to prevent adhesion of spatters.

The contact tip 114 is disposed inside the suction nozzle 112, has a tubular shape, and is fixed by being fitted into the opening side being the lower side in Fig. 10 of the tip body 117. The contact tip 114 guides the wire 101 and supplies the welding current to the wire 101. A wire supply path is formed in the contact tip 114 and has a diameter with which the contact tip 114 can be brought into contact with the wire 101. Thus, the power is supplied to the wire 101. Furthermore, the contact tip 114 is detachably attached. When the contact tip 114 wears out due an extended period of use, the contact tip 114 is replaced.

The suction path 115 guides the shield gas suctioned by using the suction nozzle 112 to the suction apparatus 1. The suction path 115 is, for example, a path formed as follows: holes having a diameter of about 1.5 mm are drilled at four positions in the tip body 117; and the drilled holes of the path meet each other at a meeting groove 116 formed in the circumferential direction. After that, the path is connected to the suction/ejection opening 5 of the suction apparatus 1 through the suctioned shield gas path 160. However, the configuration of the suction path 115 is not limited to such a configuration. Any configuration in which a path that guides the shield gas and the hydrogen source 104 from the suction nozzle 112 to the suction apparatus 1 is formed may be used.

The tip body 117 is to serve as a main body of the welding torch 110, has a tubular shape, and supports the shield gas supply nozzle 111, the suction nozzle 112, and the contact tip 114.

In the welding system 100 into which the suction apparatus 1 as described above is incorporated, when the suction apparatus 1 opens the path 7A of the path switching unit 7 to carry out the suction function, the shield gas is suctioned through the suctioned shield gas path 160, the suction path 115, and the suction nozzle 112 connected to the suction/ejection opening 5. The shield gas having been suctioned is discharged via the outlet 15 of the ejector 10.

As the compressed gas used according to the present embodiment, compressed air is used. The pressure of the compressed air is a value usually used in a factory, that is, a gage pressure of about 0.5 MPa. However, even when this pressure is changed to 0.2 MPa, general-purpose ejectors operate at various operating pressures, and by appropriate selection, a stable suction flow rate is ensured.

In the above-described configuration, after welding performed for an arbitrary period of time, when the open state of the path 7A is switched to the open state of the path 7B by using the path switching unit 7 of the suction apparatus 1 to cause the compressed air to flow out via the suction/ejection opening 5 of the suction apparatus 1, the compressed air is ejected through the suction nozzle 112 through the suctioned shield gas path 160 and the suction path 115. When this compressed air is ejected, not only fouling of the suction apparatus 1 but also fouling of the suctioned shield gas path 160, the suction path 115, and the suction nozzle 112 in the welding torch 110 can be removed. The fouling according to the present embodiment is mainly caused by fumes.

As has been described, the present invention is not limited to the above-described embodiment. Combinations of the elements of the embodiment with each other and changes and application made by one skilled in the art based on the description herein and known techniques are also intended by the present invention and included in the scope for which protection is required.

As has been described, the following items are disclosed herein.
(1) A suction apparatus that suctions a gas or an aerosol, the suction apparatus including
   an inlet via which a compressed gas flows in,
   a suction/ejection opening via which the gas or the aerosol is suctioned or via which the compressed gas is ejected,
   an ejector that has a drive opening, an intake opening, and an outlet,
   a first path that includes a pipe member which connects the inlet and the drive opening of the ejector to each other,
   a second path that includes a pipe member which connects the suction/ejection opening and the intake opening of the ejector to each other,
   a third path that includes a pipe member which connects the inlet and the suction/ejection opening to each other, and
   a path switching unit that is disposed between the second path and the third path and that switches a connection between the second path and the third path.
   When the second path is connected by the path switching unit, the gas or the aerosol is suctioned via the suction/ejection opening by means of the first path and the second path, and,
   when the third path is connected by the path switching unit, the compressed gas is ejected via the suction/ejection opening by means of the third path.
   With this configuration, the compressed gas can be ejected via the suction/ejection opening by path switching. Thus, paths fouled with dust, a hydrogen source, fumes, and the like that have been deposited can be cleaned, and accordingly, maintainability is good. Furthermore, the structure is simple, the size is reduced, and versatility is high.
(2) In the suction apparatus described in (1), the first path includes a plurality of the pipe members in the first path, the second path includes a plurality of the pipe members in the second path, and the third path includes a plurality of the pipe members in the third path.

The plurality of pipe members of the first path, the plurality of pipe members of the second path, and the plurality of pipe members of the third path are detachably attached.

With this configuration, only the pipe member that requires maintenance can be detached and cleaned or replaced.

(3) In the suction apparatus described in (1) or (2), the second path includes a filter.

The filter has a first surface and a second surface that face each other in a thickness direction.

A distance between an entrance via which the gas or the aerosol flows into the first surface of the filter and an exit via which the gas or the aerosol flows out from the second surface of the filter is greater than or equal to 10 cm in a plane perpendicular to the thickness direction.

With this configuration, foreign matter can be efficiently collected by the filter.

(4) In the suction apparatus described in any one of (1) to (3), the second path includes at least one instrument.

The second path further includes at least one of a pressure loss member disposed in the pipe member connected to the instrument and a check valve that allows a flow of a fluid only in a flowing direction toward an outside of a pneumatic circuit.

With this configuration, even in the case where the compressed gas flows into the second path, a steep change of the pressure change in the pipe member is suppressed, and accordingly, a failure of the instrument can be prevented.

(5) In the suction apparatus described in any one of (1) to (4), the second path at least includes a float-type flowmeter.

The float-type flowmeter includes a sensor that monitors a position of a float of the float-type flowmeter.

With this configuration, an intake amount of the gas or the aerosol in the second path can be monitored with a simple configuration. Furthermore, when changes in the amount of suction is monitored, timing of maintenance can be found.

(6) The suction apparatus described in (5) further includes at least an anomaly detection unit that outputs at least one of an alarm signal and an operation forceful stop signal when reduction of a flow rate to a value smaller than or equal to a predetermined value is detected by the sensor.

With this configuration, continuation of operation performed by an operator while the operator does not notice the anomaly of the suction amount can be suppressed.

(7) A suction method is for suctioning a gas or an aerosol by using a suction apparatus.

The suction apparatus includes

an inlet via which a compressed gas flows in,
a suction/ejection opening via which the gas or the aerosol is suctioned or via which the compressed gas is ejected,
an ejector that has a drive opening, an intake opening, and an outlet,
a first path that includes a pipe member which connects the inlet and the drive opening of the ejector to each other,
a second path that includes a pipe member which connects the suction/ejection opening and the intake opening of the ejector to each other, and
a third path that includes a pipe member which connects the inlet and the suction/ejection opening to each other.

A suction function and an ejection function of the suction/ejection opening are switched by switching a connection between the second path and the third path.

When the second path is connected, the gas or the aerosol is suctioned via the suction/ejection opening by means of the first path and the second path, and,

when the third path is connected, the compressed gas is ejected via the suction/ejection opening by means of the third path.

With this configuration, the compressed gas can be ejected via the suction/ejection opening by path switching. Thus, paths fouled with dust, a hydrogen source, fumes, and the like that have been deposited can be cleaned, and accordingly, maintainability is good. Furthermore, the configuration is simple, the size is reduced, and versatility is high.

(8) A welding system includes a welding torch that includes a shield gas supply nozzle through which a shield gas is supplied to a weld zone and a suction nozzle through which the shield gas is suctioned, and
a suction apparatus that suctions a gas or an aerosol.
The suction apparatus includes
an inlet via which a compressed gas flows in,
a suction/ejection opening via which the gas or the aerosol is suctioned or via which the compressed gas is ejected,
an ejector that has a drive opening, an intake opening, and an outlet,
a first path that includes a pipe member which connects the inlet and the drive opening of the ejector to each other,
a second path that includes a pipe member which connects the suction/ejection opening and the intake opening of the ejector to each other,
a third path that includes a pipe member which connects the inlet and the suction/ejection opening to each other, and
a path switching unit that is disposed between the second path and the third path and that switches a connection between the second path and the third path.

When the second path is connected by the path switching unit, the gas or the aerosol is suctioned via the suction/ejection opening by means of the first path and the second path, and,

when the third path is connected by the path switching unit, the compressed gas is ejected via the suction/ejection opening by means of the third path.

The suction nozzle of the welding torch is connected to the suction/ejection opening of the suction apparatus.

With this configuration, not only fouling of the suction apparatus but also fouling of the shield gas supply nozzle, the suction nozzle, and the like in the welding torch can be removed.

(9) A welding method in which welding is performed by using the welding system described in (8).

With this configuration, not only fouling of the suction apparatus but also fouling of the shield gas supply nozzle, the suction nozzle, and the like in the welding torch can be removed.

(10) An additive manufacturing method in which a stack object is made by stacking layers with a weld bead formed by melting and solidifying a filler metal by using the welding system described in (8) .

With this configuration, not only fouling of the suction apparatus but also fouling of the shield gas supply nozzle, the suction nozzle, and the like in the welding torch can be removed.

Although a variety of the embodiments have been described herein with reference to the drawings, of course, the present invention is not limited to such examples. It is apparent that one skilled in the art can make a variety of changes and modifications within the categories described in the claims, and, of course, it is to be understood that these changes and modifications are included within the technical scope of the present invention. Furthermore, any combination of the elements of the above-described embodiment may be made without departing from the gist of the present invention.

The present application is based on Japanese Patent Application (Japanese Patent Application No. 2021-096813) filed in the Japan Patent Office on June 9, 2021, the entire contents of which are incorporated herein by reference.

### Reference Signs List

1 suction apparatus
2 housing
3 inlet
5 suction/ejection opening
7 path switching unit
7A, 7B path
8 binding band
9 hexagon socket set screw (pressure loss member)
10 ejector
11 drive opening
13 intake opening
15 outlet
17 nozzle
20 filter
21 first surface
23 second surface
25 entrance
27 exit
31, 33, 35 check valve
37 solenoid valve
41 flowmeter
43 vacuum gage
45 pressure gage
51, 53, 55, 57, 59 branch pipe
60 anomaly detection unit
61 reference threshold setting device
63 anomaly determination device
65 anomaly display device
67 operation stop control unit
70 suction apparatus start control unit
71 reception device
73 determination device
75 solenoid valve drive apparatus
100 welding system
100W work
101 welding wire
102 wire projecting portion
103 periphery
104 hydrogen source
105 arrow
106 arc
110 welding torch
111 shield gas supply nozzle
112 suction nozzle
113 opening
114 contact tip
115 suction path
116 meeting groove
117 tip body
118 orifice
160 suctioned shield gas path

## Claims

1. A suction apparatus that suctions a gas or an aerosol, the suction apparatus comprising:
an inlet via which a compressed gas flows in;
a suction/ejection opening via which the gas or the aerosol is suctioned or via which the compressed gas is ejected;
an ejector that has a drive opening, an intake opening, and an outlet;
a first path that includes a pipe member which connects the inlet and the drive opening of the ejector to each other;
a second path that includes a pipe member which connects the suction/ejection opening and the intake opening of the ejector to each other;
a third path that includes a pipe member which connects the inlet and the suction/ejection opening to each other; and
a path switching unit that is disposed between the second path and the third path and that switches a connection between the second path and the third path, wherein,
when the second path is connected by the path switching unit, the gas or the aerosol is suctioned via the suction/ejection opening by means of the first path and the second path, and,
when the third path is connected by the path switching unit, the compressed gas is ejected via the suction/ejection opening by means of the third path.

2. The suction apparatus according to claim 1, wherein
the first path includes a plurality of the pipe members in the first path, the second path includes a plurality of the pipe members in the second path, and the third path includes a plurality of the pipe members in the third path, and wherein
the plurality of pipe members of the first path, the plurality of pipe members of the second path, and the plurality of pipe members of the third path are detachably attached.

3. The suction apparatus according to claim 1 or 2, wherein
the second path includes a filter, wherein
the filter has a first surface and a second surface that face each other in a thickness direction, and wherein
a distance between an entrance via which the gas or the aerosol flows into the first surface of the filter and an exit via which the gas or the aerosol flows out from the second surface of the filter is greater than or equal to 10 cm in a plane perpendicular to the thickness direction.

4. The suction apparatus according to claim 1 or 2, wherein
the second path includes at least one instrument, and wherein
the second path further includes at least one of a pressure loss member disposed in the pipe member connected to the instrument and a check valve that allows a flow of a fluid only in a flowing direction toward an outside of a pneumatic circuit.

5. The suction apparatus according to claim 1 or 2, wherein
the second path at least includes a float-type flowmeter, and wherein
the float-type flowmeter includes a sensor that monitors a position of a float of the float-type flowmeter.

6. The suction apparatus according to claim 5, further comprising:
at least an anomaly detection unit that outputs at least one of an alarm signal and an operation forceful stop signal when reduction of a flow rate to a value smaller than or equal to a predetermined value is detected by the sensor.

7. A suction method for suctioning a gas or an aerosol by using a suction apparatus, wherein
the suction apparatus includes
an inlet via which a compressed gas flows in,
a suction/ejection opening via which the gas or the aerosol is suctioned or via which the compressed gas is ejected,
an ejector that has a drive opening, an intake opening, and an outlet,
a first path that includes a pipe member which connects the inlet and the drive opening of the ejector to each other,
a second path that includes a pipe member which connects the suction/ejection opening and the intake opening of the ejector to each other, and
a third path that includes a pipe member which connects the inlet and the suction/ejection opening to each other, wherein
a suction function and an ejection function of the suction/ejection opening are switched by switching a connection between the second path and the third path, and wherein
when the second path is connected, the gas or the aerosol is suctioned via the suction/ejection opening by means of the first path and the second path, and,
when the third path is connected, the compressed gas is ejected via the suction/ejection opening by means of the third path.

8. A welding system comprising:
a welding torch that includes a shield gas supply nozzle through which a shield gas is supplied to a weld zone and a suction nozzle through which the shield gas is suctioned; and
a suction apparatus that suctions a gas or an aerosol, wherein
the suction apparatus includes
an inlet via which a compressed gas flows in,
a suction/ejection opening via which the gas or the aerosol is suctioned or via which the compressed gas is ejected,
an ejector that has a drive opening, an intake opening, and an outlet,
a first path that includes a pipe member which connects the inlet and the drive opening of the ejector to each other,
a second path that includes a pipe member which connects the suction/ejection opening and the intake opening of the ejector to each other,
a third path that includes a pipe member which connects the inlet and the suction/ejection opening to each other, and
a path switching unit that is disposed between the second path and the third path and that switches a connection between the second path and the third path, wherein,
when the second path is connected by the path switching unit, the gas or the aerosol is suctioned via the suction/ejection opening by means of the first path and the second path, and,
when the third path is connected by the path switching unit, the compressed gas is ejected via the suction/ejection opening by means of the third path, and wherein
the suction nozzle of the welding torch is connected to the suction/ejection opening of the suction apparatus.

9. A welding method, wherein
welding is performed by using the welding system according to claim 8.

10. An additive manufacturing method, wherein
a stack object is made by stacking layers with a weld bead formed by melting and solidifying a filler metal by using the welding system according to claim 8.
